## Europäisches Patentamt
## European Patent Office
## Office européen des brevets

(19)

(11) Veröffentlichungsnummer: **0 275 032 B1**

# EUROPÄISCHE PATENTSCHRIFT

(12)

(45) Veröffentlichungstag der Patentschrift: **02.10.91**

(51) Int. Cl.⁵: **B28D 1/14**, B23B 29/034

(21) Anmeldenummer: **88100132.5**

(22) Anmeldetag: **08.01.88**

(54) **Verfahren und Vorrichtung zum Herstellen einer hinterschnittenen Bohrung in einem Befestigungsgrund, wie Beton.**

(30) Priorität: **14.01.87 DE 3700831**

(43) Veröffentlichungstag der Anmeldung:
**20.07.88 Patentblatt 88/29**

(45) Bekanntmachung des Hinweises auf die Patenterteilung:
**02.10.91 Patentblatt 91/40**

(84) Benannte Vertragsstaaten:
**AT BE CH DE ES FR GB IT LI NL SE**

(56) Entgegenhaltungen:
**EP-A- 0 058 746      EP-A- 0 231 720
DD-A- 40 756      DE-A- 3 015 617
DE-A- 3 207 599      FR-A- 1 443 246**

(73) Patentinhaber: **Unistrut Europe PLC
Edison Road Elms Industrial Estate
Bedford MK41 OHU(GB)**

(72) Erfinder: **Fricker, Siegfried
Wacholderweg 27
W-7258 Heimsheim(DE)**

(74) Vertreter: **Jackisch, Walter, Dipl.-Ing.
Patentanwalt W. Jackisch & Partner Menzelstrasse 40
W-7000 Stuttgart 1(DE)**

**Beschreibung**

Die Erfindung betrifft ein Verfahren zum Herstellen einer hinterschnittenen Bohrung nach dem Oberbegriff des Anspruches 1 sowie eine Vorrichtung zur Durchführung dieses Verfahrens.

Zur Senkung von Spannungen in einem mit einem Spreizdübel versehenen Bohrloch ist es bekannt, das Bohrloch an seinem Grund zu erweitern.

Die Erweiterung eines Bohrloches an seinem Grund (Hinterschneidung) bedingt jedoch Spezialwerkzeuge, die teuer und kompliziert in der Handhabung sind.

Der Erfindung liegt die Aufgabe zugrunde, ein Verfahren und eine Vorrichtung zum Herstellung einer hinterschnittenen Bohrung anzugeben, deren Hinterschneidung einfach herzustellen ist und in Tiefe, Form und Länge frei wählbar sein soll.

Diese Aufgabe wird durch das Verfahren nach Anspruch 1 gelöst. Eine Vorrichtung zur Durchführung des Verfahrens ist im Anspruch 3 angegeben.

Bei dem Verfahren nach der Erfindung arbeitet sich beim Einschieben der Haltevorrichtung in das Bohrloch der Fräskopf, ohne schädigende Belastungen des Fräsers, in die Wand der zylindrischen Bohrung ein. Ist die Haltevorrichtung in das Bohrloch vollständig - d. h. über einen vorgebbaren Teil der Bohrlochtiefe - eingefahren, hat der Fräskopf entsprechend seiner radialen Verlagerung aufgrund der vorhandenen Exzentrizität aus der Bohrungswand den ersten Teil der gewünschten Hinterschneidung ausgefräst. Bei Drehung der in das Bohrloch eingeschobenen Haltevorrichtung um die Bohrlochachse wird aufgrund der exzentrischen Lagerung der Fräskopf auf einen Kreis um die Bohrlochachse geführt und die Hinterschneidung über 360° ausgefräst. Die Haltevorrichtung wird bis nahe an den Fräskopf herangeführt, so daß radial auf den Kopf wirkende Kräfte über den Fräserschaft und die Stützhülse unmittelbar in die Bohrlochwandung abgeleitet werden. Mit der Erfindung lassen sich vorteilhaft Hinterschneidungen von hoher Genauigkeit am Ende eines Sackloches ausführen.

Wird ein kombinierter Fräser/Bohrer verwendet, kann in einem Arbeitsgang das Bohrloch gebohrt, die Haltevorrichtung eingeschoben und die Hinterschneidung gefräst werden.

Mit der im Anspruch 3 angegebenen Haltevorrichtung ist ein einfaches, unkompliziertes, robustes Werkzeug zum Herstellen hinterschnittener Bohrungen angegeben. Mittels des Handrades ist die Vorrichtung leicht und ohne großen Kraftaufwand drehbar.

Aus der FR- A 1 443 246 ist eine Bohrvorrichtung zur Herstellung tiefer Bohrungen mittels spanabhebender Schneiden bekannt geworden. Bei dieser Vorrichtung wird durch eine Bohrung eines Werkzeugkörpers eine Arbeitsspindel hindurchgeführt, die an ihrem freien Ende eine Abstützung im Bohrloch findet, wobei ein radialer Stift gegenüber dem Bohrloch mittels einer Schraubenfeder abgestützt ist. Eine am anderen Ende des Werkzeugkörpers befindliche Handhabe ermöglicht, daß das über die Handhabe aufgebrachte Drehmoment durch Keilwirkung auf die Spindel übertragen wird, so daß radial zustellbare Schneiden im Bohrloch durch Spanabnahme wirksam werden. Am Werkzeugkörper ist ferner ein ringförmiger Verteilerkanal vorgesehen, der über einen axialen Zufuhrkanal Öl oder eine andere Schmierflüssigkeit zu den Schneidsteinen führt. Bei der bekannten Vorrichtung ist keine in der Habe des Handrades axial verschiebbare Stütze vorgesehen, derart, daß diese Stützhülse längs des Bohrerschaftes verschoben werden kann, wodurch die Vorrichtung ganz unterschiedlichen Bohrungstiefen anpassbar ist. Mit der erfindungsgemäßen Vorrichtung läßt sich im Gegensatz zu bekannten Vorrichtungen der Fräskopf rotierend in die Bohrung einfahren und während des Rotierens nach dem Einschieben der Hülse langsam aus seiner zentrischen Lage in die exzentrische Lage durch Drehen der Handhabe überführen. Dadurch wird nach dem Einschieben der Hülse in die Bohrung der Fräser ganz allmählich, und zwar entsprechend der Vorschubgeschwindigkeit beim Einschieben der Hülse exzentrisch verlagert, wodurch eine besonders schonende Abtragung von hartem Gestein, beispielsweise Beton, Mauerwerk oder dgl., ermöglicht wird.

In den Zeichnungen ist ein Ausführungsbeispiel der Erfindung dargestellt. Es zeigen:

Fig. 1    einen Schnitt durch ein mit einem Bohrer gefertiges Bohrloch,

Fig. 2    einen Schnitt durch das Bohrloch nach Fig. 1 mit eingesetztem Fräser und auf den Fräserschaft aufgeschobener Haltevorrichtung

Fig. 3    einen Schnitt durch das Bohrloch mit in das Bohrloch eingeschobener Stützhülse der Haltevorrichtung,

Fig. 4    einen Schnitt durch das Bohrloch mit ausgefräster Hinterschneidung,

Fig. 5    eine Ansicht der Haltevorrichtung mit eingeschobenem Fräser und angeschlossener Bohrmaschine

Fig. 5a   einen Schnitt durch die Stützhülse der Haltevorrichtung mit in der Stützhülse liegendem Fräserschaft,

Fig. 5b   einen Schnitt durch die Stützhülse mit leerer Aufnahme,

Fig. 5c   eine Ansicht der Stützhülse mit einem darunter gezeichnetem Schnitt nach Linie V c - V c

Fig. 5d   eine Draufsicht auf die Stützhülse mit darunter befindlicher Stirnansicht der Stützhülse

Fig. 5e    eine Ansicht auf die Rasterung der Stützhülse mit entsprechender Stirnansicht,

Fig. 5f    eine Ansicht der Klemmschraube,

Fig. 6    eine Ansicht eines Bohrers mit integriertem Fräser für keglige Hinterschneidungen,

Fig. 7    eine Ansicht eines Fräsers für keglige Hinterschneidungen,

Fig. 8    eine Ansicht eines Fräsers für tonnenartige Hinterschneidungen,

Fig. 9    eine Ansicht der erfindungsgemäßen Vorrichtung im Einsatz mit einer Bohrmaschine mit Absaugung

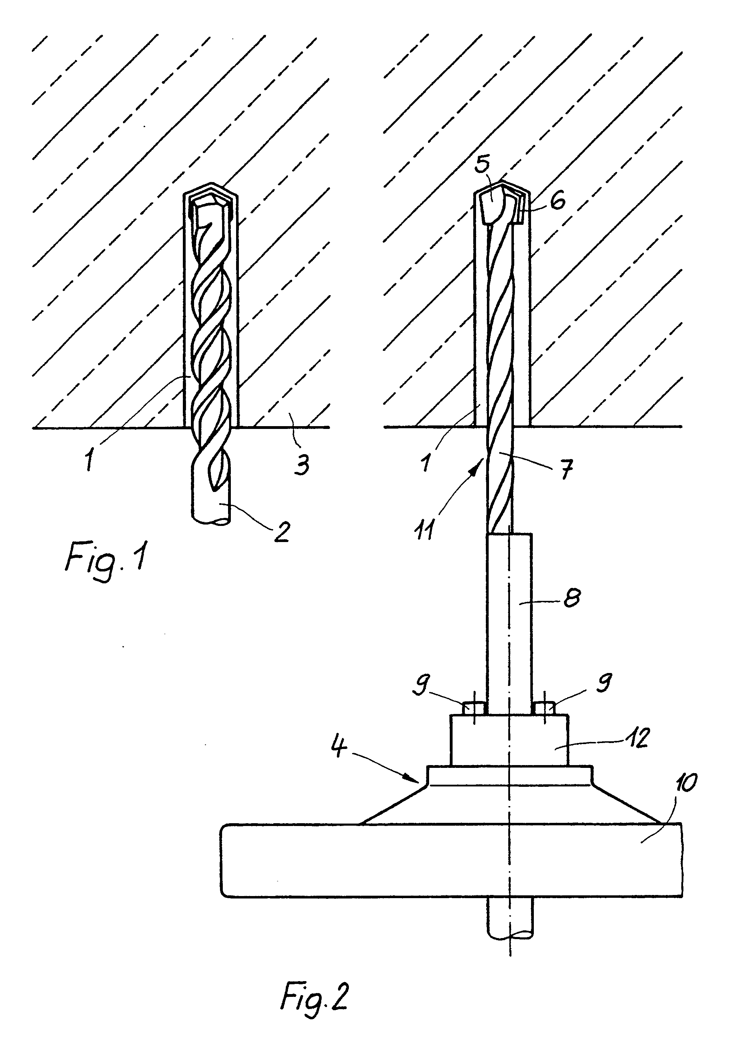

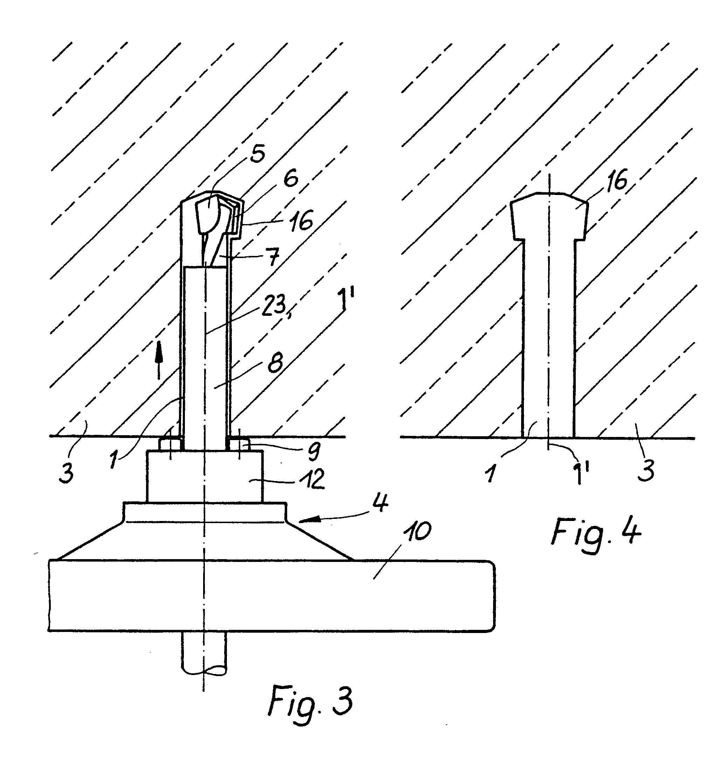

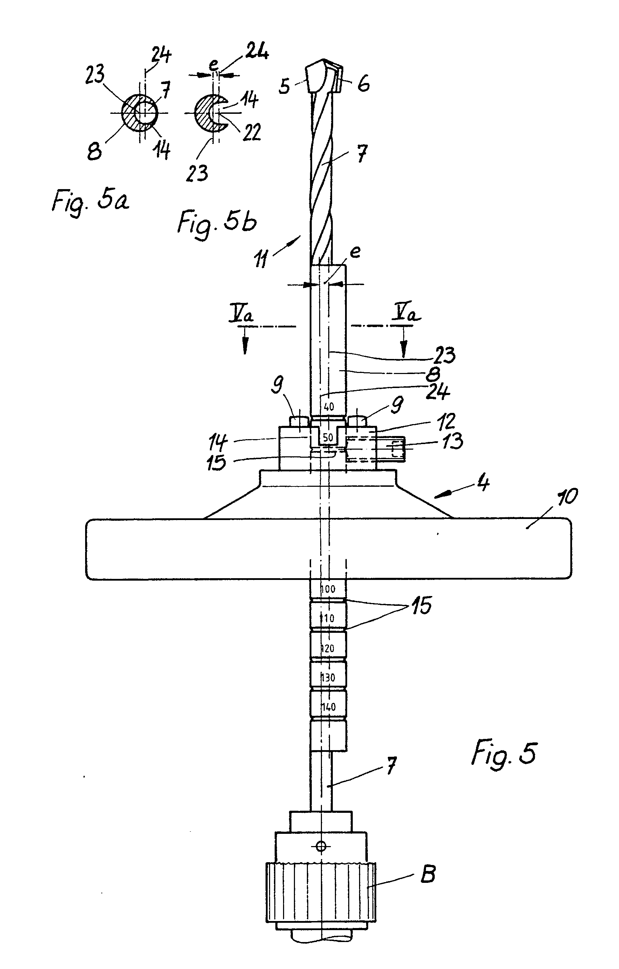

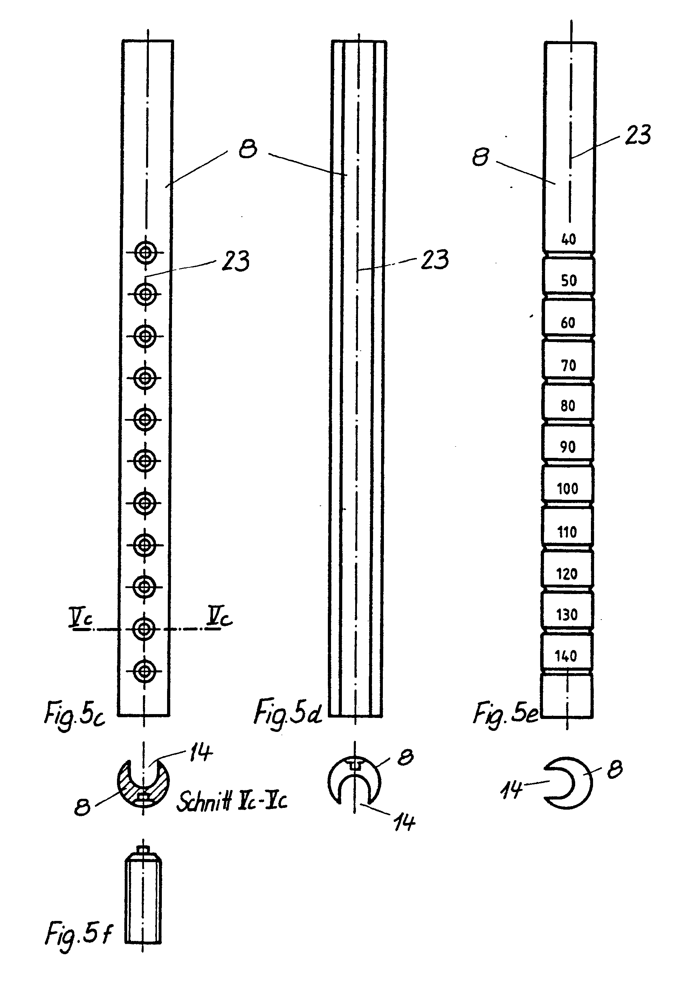

Zum Fertigen einer hinterschnittenen Bohrung in einer Betonwand 3 wird zunächst in bekannter Weise mit einem zylindrischen Bohrer 2 ein Sackloch 1 in die Wand 3 eingebracht (Fig. 1). Danach wird anstelle des Bohrers 2 ein Fräser 11 in das Bohrloch 1 eingeschoben (Fig. 2), dessen Kopf 5 etwa dem Durchmesser des Bohrloches 1 entspricht und vorzugsweise eine seitliche Frässchneide 6 aufweist. Der Schaft 7 des Fräsers 11 ist im Durchmesser kleiner als der Fräskopf 5 ausgebildet; vorzugsweise ist der Durchmesser des Fräserschaftes 7 um die Hälfte kleiner als der Durchmesser des Bohrloches 1. Der Fräser 11 ist über seinen Schaft 7 in bekannter Weise mit einer Bohrmaschine B, vgl. Fig. 5, antriebsverbunden. Der Fräserschaft 7 läuft in der Stützhülse 8 einer Haltevorrichtung 4, die im Ausführungsbeispiel ein Handrad 10 aufweist, das gleichachsig mit der Stützhülse 8 verbunden ist. Hierzu ist radial in die vorzugsweise aus Metall bestehende Nabe 12 (Fig. 5) des Handrades 10 eine Klemmschraube 13 eingedreht, die die drehstarre Verbindung zwischen dem Handrad und der Stützhülse 8 herstellt, sowie die Stützhülse 8 in ihrer eingestellten axialen Lage festlegt. Nach Lösen der Klemmschraube 13 ist die Stützhülse 8 axial verschiebbar, wodurch die Länge des in das Bohrloch 1 eintauchenden Stützhülsenabschnittes (Fig. 3) entsprechend der jeweils zu bearbeitenden Tiefe der Bohrung einstellbar ist.

Die gleichachsig zum Handrad 10 angeordnete Stützhülse 8 ist - wie sich aus den Darstellungen der Fig. 5a, 5e ergibt, aus einem Vollmaterial, vorzugsweise Stahl, gefertigt, das axial eine durchgehende Aufnahme 14 für den Fräserschaft 7 aufweist.

Die Aufnahme 14 ist als zum Umfang offene Längsnut in der Stützhülse 8 vorgesehen (Fig. 5b). Die Achse 22 der Aufnahme 14 liegt parallel zur Stützhülsenachse 23 und weist zu dieser einen Abstand "e" auf (Fig. 5b). Damit liegt die Aufnahme 14 exzentrisch in der Stützhülse 8, so daß bei einer Drehung des Handrades 10 um die Stützhülsenachse 23 und damit um die Achse des Handrades 10 bzw. um die Achse 1' des Bohrloches 1 die Achse 22 der Aufnahme 14 bzw. die Achse 24 des darin aufgenommenen Fräserschaftes 7 auf einem Kreis mit dem Radius e um die Stützhülsenachse 23 bewegt wird, so daß sich der Fräser 11 samt Kopf 5 exzentrisch um die Stützhülsenachse 23 bewegt, wenn das Handrad 10 um 360° gedreht wird.

Die Längsnut als Aufnahme 14 für den Fräserschaft 7 ist nicht nur eine einfache und ausreichende Führung für den Fräserschaft; sie gewährleistet auch ein einfaches Abführen des anfallenden Bohrmehls zwischen der Bohrlochwandung und dem in der Längsnut 14 rotierenden Fräserschaft 7. Der in der Aufnahme 14 eingesetzte Fräserschaft 7 bildet gleichzeitig einen äußeren Mantelteil der Stützhülse 8, wie in Fig. 5a dargestellt ist, und gibt der Stützhülse 8' eine zusätzliche Stabilität. Die Exzentrizität "e" ist im Ausführungsbeispiel gleich dem Radius des Fräserschaftes 7; sie kann jedoch beliebig gewählt werden.

Beim erfindungsgemäßen Verfahren wird der rotierende Fräser 11 in das Bohrloch 1 bis zum Bohrungsgrund eingefahren und bei rotierendem Fräser 11 die Stützhülse 8 in das Bohrloch 1 geschoben. Der Durchmesser der Stützhülse 8 entspricht dem Bohrlochdurchmesser. Durch das Einschieben der Stützhülse 8 und der bestehenden Exzentrizität "e" zwischen der nutförmigen Fräserschaftaufnahme 14 und der Stützhülse 8 wird der rotierende Fräser im Bohrloch radial verlagert und fräst sich mit seinem Kopf in die zylindrische Bohrlochwand ein (Fig. 3).

Die Stützhülse 8 wird soweit eingefahren, bis deren freies Ende nahe hinter dem Fräskopf 5 liegt und diesen gegen radiale Kräfte an der Bohrlochwandung abstützt. Die hierzu erforderliche Länge des Stützhülsenabschnittes ist vorher durch axiales Verschieben der Stützhülse im Handrad 10 eingestellt worden.

Die Nabe 12 des Handrades 10 ist beim Arbeiten mit der Vorrichtung über drei Stifte 9 gegen die Wand 3 abgestützt, wodurch ein Freiraum zwischen Nabe 12 und Wand 3 zum ungehinderten Austreten von Bohrmehl gebildet ist; anstelle der Stifte 9 können auch andere Abstützmittel vorgesehen sein. Es ist ferner eine Ausführung mit nur einem Stift möglich. Je schneller die Führungshülse 8 in das Bohrloch 1 eingeführt wird, um so schneller erhält der Fräskopf 5 mit Schneide 6 eine ausreichend stabile Führung im Bohrloch, so daß dieser entsprechende Fräsdrücke aufnehmen und genaue Hinterschneidungen auch beim hartem Gestein bzw. wenn der Fräskopf 5 auf härtere Widerstände, z.b. Eisenteile oder dgl. stößt, aufnehmen. Dabei kann durch entsprechend langsames Drehen des Handrades der Vorschub des Fräskopfes 5 dem jeweiligen Widerstand beim Bohren leicht angepaßt werden.

Die Ausbildung der Stützhülse 8 durch eine zu ihrem Umfang offene Längsnut hat den Vorteil, daß Bohrmehl auf kürzestem Wege auf der ganzen Länge der Stützhülse entweichen kann, so daß die Gefahr des Festsetzens des Fräserschaftes 7 in der Stützhülse 8 vermieden ist.

Nachdem die Stützhülse 8 bis zum Anschlag der Stifte 9 in das Bohrloch 1 eingefahren ist, wird das Handrad 10 gedreht, wobei sich der Fräskopf auf einem Kreis mit dem Radius e um die Bohrungsachse 1' (Fig. 3) bzw. die Stützhülsenachse 23 bewegt und die Hinterschneidung 16 ausfräst. Nach Drehung des Handrades 10 um 360° ist die Hinterschneidung 16 fertiggestellt (Fig. 4).

Die Raster 15 im Umfang der Stützhülse 8 sind vorteilhaft so angeordnet, daß sie der axialen Arbeitstiefe des Fräskopfes 5 angepaßt sind.

Ist die gewünschte Hinterschneidung gefertigt, wird zuerst die Stützhülse 8 und dann der Fräser 11 aus dem Bohrloch 1 gezogen. Anstelle des Handrades 10 zum Drehen der Stützhülse 8 sind auch andere Mittel geeignet, so zum Beispiel ein mit der Stützhülse 8 drehstarr verbundener Hebel.

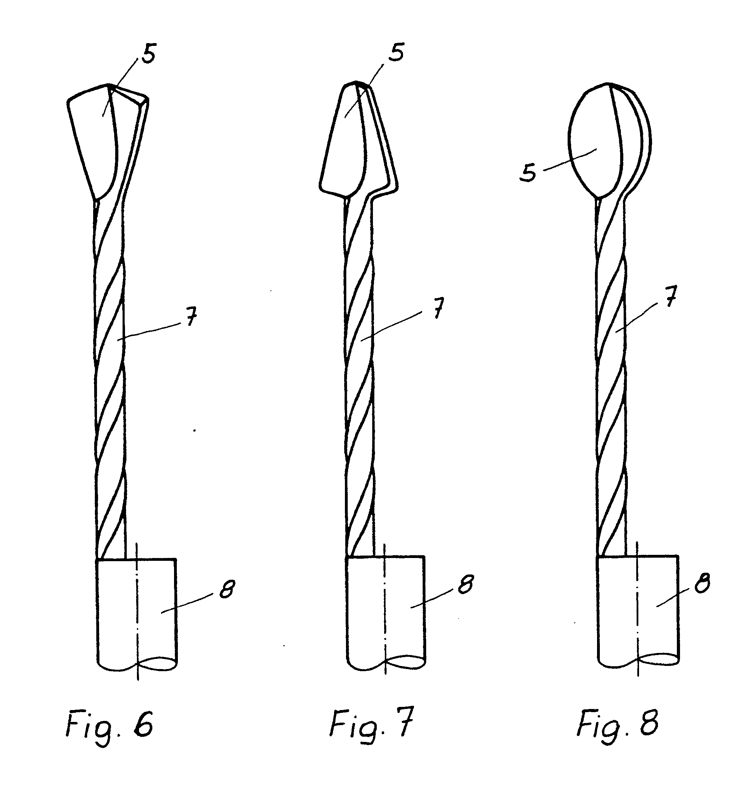

Der kombinierte Bohrer/Fräser nach Fig. 6 eignet sich sowohl zum Bohren des zylindrischen Bohrloches 1 wie zum Fertigen einer spitzkegligen Hinterschneidung. Ein Wechselvorgang zwischen Bohrer und Fräser ist bei diesem Werkzeug daher nicht erforderlich, so daß der Arbeitsgang zur Herstellung einer hinterschnittenen Bohrung vorteilhaft verkürzt ist.

Mit einem Fräser nach Fig. 7 lassen sich rechtwinklige, mit dem Fräser nach Fig. 8 löffelartige bzw. tonnenartige Hinterschneidungen fertigen. Der Fräser kann auch zylindrisch ausgebildet sein oder eine andere gewünschte Form haben. Mit dem erfindungsgemäßen Verfahren ist daher in einfacher Weise eine Hinterschneidung in beliebiger Form herstellbar.

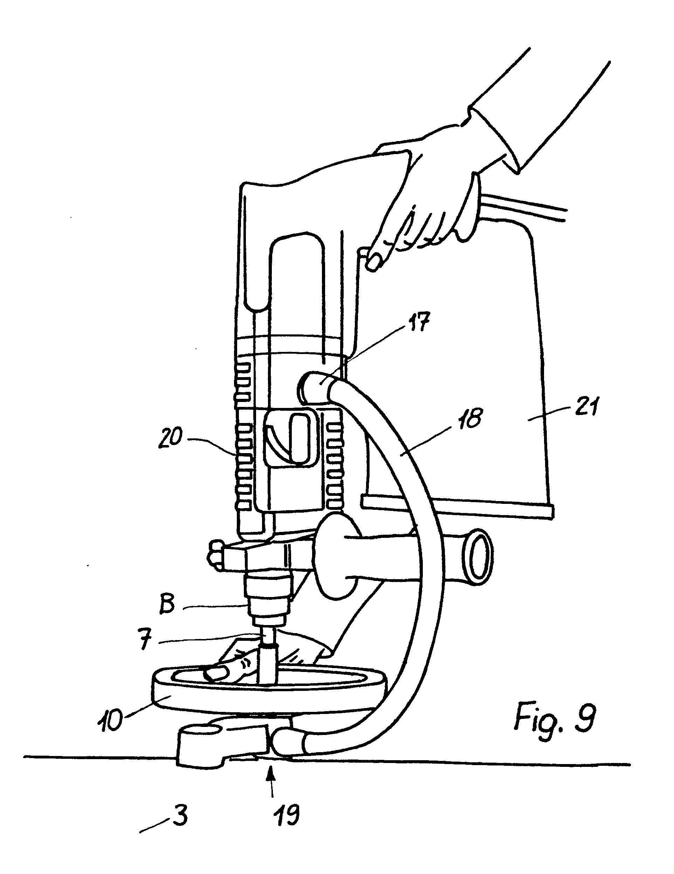

In Weiterbildung der Erfindung ist vorgesehen, das insbesondere beim Fräsen der Hinterschneidung 16 austretende Bohrmehl abzusaugen. Hierzu weist die Bohrmaschine 20 einen Sauganschluß 17 auf (Fig. 9), der über einen Saugschlauch 18 mit einem zwischen dem Handrad 10 und der Wand 3 angeordneten Sammelgehäuse 19 verbunden ist. Das Bohrmehl wird aus dem Sammelgehäuse 19 über den Saugschlauch 18 in einem Sammelbeutel 21 abgesaugt.

Aus Fig. 9 ist ferner ersichtlich, daß der Schaft 7 des Fräsers 11 die im Handrad 10 festgelegte Stützhülse durchragt und in das Bohrfutter B einer Bohrmaschine 20 eingespannt ist.

## Patentansprüche

1. Verfahren zur Herstellung einer hinterschnittenen Bohrung in einem aus hartem Werkstoff bestehenden Befestigungsgrund, wie Beton, Mauerwerk oder dgl., wobei zunächst ein zylindrisches Bohrloch (1) und daran anschließend die Hinterschneidung (16) nach Einführen einer Stützhülse (8) in das Bohrloch (1) und Drehen eines Hinterschneidungswerkzeuges hergestellt wird, dadurch gekennzeichnet, daß ein mit mehreren Schneiden (6) besetzter Fräskopf (5), dessen Durchmesser größer als der seines in einer Stützhülse (8) eingeschobenen Schaftes (7) ist, während seiner Rotation in das vorgebohrte Bohrloch (1) bis zu einer gewünschten Tiefe eingefahren wird und danach während der Rotation des Fräsers (11) eine axialbewegliche Stütshülse (8) in das Bohrloch (1) so weit eingeschoben wird, bis ihr freies Ende nahe hinter dem Fräskopf (5) zu liegen kommt und den Fräskkopf (5) gegen radiale Kräfte an der Bohrlochwandung abstützt, wobei die hierzu erforderliche axiale Länge des einzuführenden Abschnittes der Stützhülse (8) vorher durch axiales Verschieben der Stützhülse (8) gegenüber der Handhabe (10) eingestellt worden ist, und daß nach dem Einfahren der Stützhülse (8) in das Bohrloch (1) bis zu ihrem Anschlag an den Befestigungsgrund die Handhabe (10) und damit der Fräskopf (5) von Hand gedreht wird, derart, daß der Fräskopf (5) mit seinen Schneiden (6) sich auf einem Kreis mit dem Radius (e) um die Bohrungsachse (1') bzw. die Stützhülsenachse (23) bewegt und die Hinterschneidung (16) ausfräst, und daß nach Fertigstellung der Hinterschneidung (16) zuerst die Stützhülse (8) und dann der Fräser (11) aus dem Bohrloch (1) herausgezogen werden.

2. Verfahren nach Anspruch 1, dadurch gekennzeichnet, daß zur Verlängerung der hergestellten Hinterschneidung (16) zunächst das Bohrloch (11) durch axiales Vorschieben des Fräsers (11) mit Fräskopf über die bereits gefertigte Hinterschneidung (16) hinaus verlängert wird, und daß dann die Hülse (8) im Bohrloch auf dessen größere Tiefe nachgeführt und anschließend durch manuelles Drehen der Handhabe (10) die Hinterschneidung (16) axial verlängert wird.

3. Vorrichtung zur Herstellung einer Hinterschneidung einer Bohrung in einem aus hartem Werkstoff bestehenden Befestigungsgrund, beispielsweise Beton, Mauerwerk usw. mit einer in das vorgebohrte Bohrloch (1) einführbaren Stützhülse (8) und einer die Stützhülse (8) drehbaren Handhabe (10), wobei die Stützhülse (8) eine Aufnahme (14) für den Schaft (7) eines rotierenden Schneidwerkzeuges (11, 5) hat, wobei die Achse (22) der Aufnahme (14) parallel und mit Abstand (Exzentrizität e) zur Achse (23) der Stützhülse (8) liegt, gekennzeichnet durch

a) Die Stützhülse (8) und die drehbare Handhabe (10) sind voneinander getrennte Teile, wobei

b) die Stützhülse (8) in einer Habe (12) der drehbaren Handhabe (10) zwecks Einstellung auf eine gewünschte Tiefe der zu hinterschneidenden Bohrung axial verschiebbar gelagert ist, und

c) Arretiermittel (13) zur Fixierung der Stützhülse (8) in ihrer eingestellten axialen Lage und zur drehfesten Verbindung zwischen Handhabe (10) und Stützhülse (8) vorgesehen sind, und

d) das Hinterschneidwerkzeug aus einem Fräskopf (5) mit mehreren, über seinen Umfang gleichmäßig verteilten Schneiden (6) besteht.

4. Vorrichtung nach Anspruch 3, dadurch gekennzeichnet, daß die Stützhülse (8) und die als Handrad ausgebildete Handhabe (10) gleichachsig zueinander angeordnet sind.

5. Vorrichtung nach Anspruch 3 oder 4, dadurch gekennzeichnet, daß die Stützhülse (8) aus Vollmaterial, beispielsweise Stahl, besteht und in der Stützhülse (8) eine durchgehende axiale Aufnahme (14) für den Schaft (7) des Fräsers (11) vorgesehen ist.

6. Vorrichtung nach Anspruch 5, dadurch gekennzeichnet, daß die Aufnahme (14) als eine nach außen zum Umfang der Stützhülse (8) offene Längsnut ausgebildet ist und die Aufnahme (14) mit einem exzentrischen Abstand (e) in der Stützhülse (8) angeordnet ist.

7. Vorrichtung nach einem der Ansprüche 3 bis 6, dadurch gekennzeichnet, daß die beim Bohren dem Bohrloch (1) zugewandte Stirnseite des Handrades (10) gegenüber dem Befestigungsgrund abstandhaltende Mittel, vorzugsweise Stifte (9) für die Ausbildung eines Freiraumes zur Abfuhr von Bohrmehl aufweist.

8. Vorrichtung nach einem der Ansprüche 3 bis 7, dadurch gekennzeichnet, daß der Schaft (7) des Fräsers (11) als Bohrer ausgebildet ist.

9. Vorrichtung nach einem der Ansprüche 3 bis 8, dadurch gekennzeichnet, daß die exzentrische Stützhülse (8) auf ihrem Umfang mit axialem Abstand zueinander liegende Raster (15) aufweist.

## Claims

1. Method for producing an undercut hole in a mounting base consisting of hard material, such as concrete, masonry or the like, first of all a cylindrical drill hole (1) and then the undercut (16) being produced after introducing a support sleeve (8) into the drill hole (1) and rotating an undercutting tool, characterised in that a milling head (5) equipped with several cutting edges (6), whereof the diameter is greater than that of its shaft (7) inserted in a support tube (8), during its rotation is introduced into the pre-drilled drill hole (1) up to a desired depth and then during the rotation of the milling tool (11) an axially movable support sleeve (8) is inserted into the drill hole (1) until its free end comes to lie close behind the milling head (5) and supports the milling head (5) against radial forces on the drill hole wall, the axial length of the section of the support sleeve (8) to be inserted, which is necessary for this, having been adjusted previously by axial displacement of the support sleeve (8) with respect to the handle (10) and that after introducing the support sleeve (8) into the drill hole (1) until it abuts against the mounting base, the handle (10) and thus the milling head (5) is rotated manually so that the milling head (5) with its cutting edges (6) moves on a circle with the radius (e) about the axis of the hole (1') or the axis of the support sleeve (23) and mills out the undercut (16), and that after completing the undercut (16), first of all the support sleeve (8) and then the milling tool (11) are removed from the drill hole (1).

2. Method according to Claim 1, characterised in that for extending the undercut (16) produced, first of all the drill hole (11) is extended by axially advancing the milling tool (11) with the milling head beyond the already produced undercut (16) and that then the sleeve (8) in the drill hole is guided to its greater depth and then the undercut (16) is extended axially by manual rotation of the handle (10).

3. Apparatus for producing an undercut in a hole in a mounting base consisting of hard material, for example concrete, masonry etc., with a support sleeve (8) able to be introduced into the pre-drilled drill hole (1) and a handle (10) able to rotate the support sleeve (8), the support sleeve (8) having a piloting portion (14) for the shaft (7) of a rotating cutting tool (11, 5), the axis (22) of the piloting portion (14) lying parallel to and at a distance (eccentricity e) from the axis (23) of the support sleeve (8), characterised in that

a) the support sleeve (8) and the rotary handle (10) are separate parts, in which case

b) the support sleeve (8) is mounted to be axially displaceable in a boss (12) of the rotary handle (10) for the purpose of adjustment to a desired depth of the hole to be undercut, and

c) locking means (13) are provided for fixing the support sleeve (8) in its adjusted axial position and for the non-rotary connection between the handle (10) and support sleeve (8), and

d) the undercutting tool consists of a milling head (5) with a plurality of cutting edges (6) distributed uniformly over its periphery.

4. Apparatus according to Claim 3, characterised in that the support sleeve (8) and the handle (10) constructed as a hand wheel are arranged coaxially with respect to each other.

5. Apparatus according to Claim 3 or 4, characterised in that the support sleeve (8) consists of solid material, for example steel and provided in the support sleeve (8) is a continuous axial piloting portion (14) for the shaft (7) of the milling tool (11).

6. Apparatus according to Claim 5, characterised in that the piloting portion (14) is constructed as a longitudinal groove open on the outside towards the periphery of the support sleeve (8) and the piloting portion (14) is arranged with an eccentric spacing (e) in the support sleeve (8).

7. Apparatus according to one of Claims 3 to 6, characterised in that the front end of the hand wheel (10) facing the drill hole (1) at the time of drilling comprises means for maintaining a spacing with respect to the mounting base, preferably pins (9) for forming a free space for the discharge of fine drillings.

8. Apparatus according to one of Claims 3 to 7, characterised in that the shaft (7) of the milling tool (11) is constructed as a drill.

9. Apparatus according to one of Claims 3 to 8, characterized in that on its periphery the eccentric support sleeve (8) comprises notches (15) lying at an axial distance apart.

## Revendications

1. Procédé pour la réalisation d'un alésage contre-dépouillé dans un matériau de fixation constitué d'un matériau dur tel que du béton de la maçonnerie ou analogues, qui consiste à percer tout d'abord un trou de forage cylindrique (1) et à réaliser ensuite la contre-dépouille (16) après l'introduction d'une douille d'appui (8) dans le trou de forage (1) et après la rotation d'un outil à contre-dépouiller, **caractérisé en ce** qu'une tête de fraisage (5) équipée de plusieurs taillants (6) et dont le diamètre est plus grand que celui de sa tige (7) engagée dans une douille d'appui (8) est engagée au cours de sa rotation dans le trou de forage (1) percé préalablement, jusqu' à une profondeur désirée, et qu'une douille d'appui (8) mobile dans le sens axial est ensuite engagée pendant la rotation de la fraise (11) dans le trou de forage (1) jusqu'à ce que son extrémité libre se situe juste derrière la tête de fraisage (5) et assure l'appui de ladite tête de fraisage (5) sur la paroi du trou de forage contre des forces radiales, la longueur axiale de la section à engager de la douille d'appui (8) nécessaire pour cela ayant été réglée au préalable par le déplacement axial de la douille d'appui (8) par rapport à la prise (10); que, après l'introduction de la douille d'appui (8) dans le trou de forage (1) jusqu'à sa venue en butée contre le matériau de fixation, la prise (10) et donc la tête de fraisage (5) sont tournées à la main de telle façon que la tête de fraisage (5) avec ses taillants (6) se déplace sur un cercle d'un rayon (e) autour de l'axe (1') de l'alésage et respectivement de l'axe (23) de la douille d'appui, et fraise la contre-dépouille (16); et que, après la réalisation de la contre-dépouille (16), on retire tout d'abord la douille d'appui (8) et ensuite la fraise (11) du trou de forage (1).

2. Procédé selon la revendication 1, caractérisé en ce que, pour le prolongement de la contre-dépouille (16) réalisée, on prolonge tout d'abord le trou de forage (11) par l'avancement axial de la fraise (11) avec la tête de fraisage au-delà de la contre-dépouille (16) déjà réalisée; que la douille (8) est ensuite amenée dans le trou de forage à la profondeur plus grande de celui-ci; et que la contre-dépouille (16) est ensuite prolongée dans le sens axial par la rotation manuelle de la prise (10).

3. Dispositif pour la réalisation d'une contre-dépouille d'un alésage dans un matériau de fixation constitué d'un matériau dur, par exemple du béton, de la maçonnerie etc., comprenant une douille d'appui (8) pouvant être introduite dans le trou de forage (1) percé préalablement et une prise (10) permettant de tourner la douille d'appui (8), la douille d'appui (8) présentant un logement (14) pour la tige (7) d'un outil de coupe tournant (11, 5), l'axe (22) du logement (14) étant disposé parallèlement et à distance (excentricité e) par rapport à l'axe (23) de la douille d'appui (8), **caractérisé en ce** que

a) la douille d'appui (8) et la prise (10) constituent des éléments séparés,

b) la douille d'appui (8) est montée de manière mobile dans le sens axial dans un moyeu (12) de la prise (10) tournante pour permettre le réglage sur une profondeur désirée,

c) des moyens de blocage (13) sont prévus pour l'immobilisation de la douille d'appui (8) dans sa position axiale réglée et pour la liaison rigide en rotation entre la prise (10) et la douille d'appui (8), et que

d) l'outil à contre-dépouiller est constitué par une tête de fraisage (5) avec plusieurs taillants (6) répartis uniformément sur sa périphérie.

4. Dispositif selon la revendication 3, caractérisé en ce que la douille d'appui (8) et la prise (10) conformée en volant sont montées sur le même axe.

5. Dispositif selon l'une des revendications 3 ou 4, caractérisé en ce que la douille d'appui (8) est constituée de matériau plein par exemple acier, et que dans la douille d'appui (8) est prévu un logement axial continu (14) pour la tige (7) de la fraise (11).

6. Dispositif selon la revendication 5, caractérisé en ce que le logement (14) est réalisé sous la forme d'une rainure longitudinale ouverte vers l'extérieur en direction de la périphérie de la douille d'appui (8), et que le logement (14) est disposé avec une excentricité (e) dans la douille d'appui (8).

7. Dispositif selon l'une des revendications 3 à 6, caractérisé en ce que la face frontale du volant (10) dirigée lors du perçage vers le trou de forage (1) comporte des moyens, de préférence des chevilles (9), qui assurent l'écartement par rapport au matériau de fixation pour former un espace libre pour l'évacuation du menu de forage.

8. Dispositif selon l'une des revendications 3 à 7, caractérisé en ce que la tige (7) de la fraise (11) est conformée en foret.

9. Dispositif selon l'une des revendications 3 à 8, caractérisé en ce que la douille d'appui excentrique (8) présente sur sa périphérie des crans (15) disposés à distance axiale les uns par rapport aux autres.

Fig.1

1

2

3

Fig.2

1

5

6

7

8

9

9

11

4

12

10

Fig. 3

Fig. 4

Fig. 5a

Fig. 5b

Fig. 5

8

23

23

8

23

8

40

50

60

70

80

90

100

110

120

130

140

Vc — Vc

Fig.5c

Fig.5d

Fig.5e

14

8 — Schnitt Vc-Vc

8

14

14 — 8

Fig.5f

11

Fig. 6

Fig. 7

Fig. 8

Fig. 9